# EUROPÄISCHE PATENTSCHRIFT

(11) **EP 4 359 757 B1**
(45) Veröffentlichungstag und Bekanntmachung des Hinweises auf die Patenterteilung: **29.04.2026**
(21) Anmeldenummer: 22737853.6
(22) Anmeldetag: 24.06.2022
(51) Int. Cl.: G01N 1/40, G01N 35/00

(54) **VORRICHTUNG FÜR DIE BEHANDLUNG VON PROBEN IN PROBENBEHÄLTERN UNTER VAKUUM**
DEVICE FOR MANAGING SAMPLES IN SAMPLE CONTAINERS UNDER A VACUUM
DISPOSITIF POUR LE TRAITEMENT D'ÉCHANTILLONS DANS DES RÉCIPIENTS D'ÉCHANTILLONS SOUS VIDE

(30) Priorität: 24.06.2021 DE 102021116408
(43) Veröffentlichungstag der Anmeldung: 01.05.2024
(73) Patentinhaber: Andreas Hettich GmbH, 78532 Tuttlingen (DE)
(72) Erfinder: MASSING, Ulrich, 79249 Merzhausen (DE)
(74) Vertreter: patcare Patentanwälte Partnerschaft mbB
(86) Internationale Anmeldenummer: PCT/EP2022/067414
(87) Internationale Veröffentlichungsnummer: WO 2022/269068

(56) Entgegenhaltungen:
- WO-A1-00/47976
- JP-A- 2009 220 875
- US-A- 3 304 990
- US-A1- 2007 025 180
- US-A1- 2020 131 460

## Beschreibung

Die Erfindung betrifft eine Vorrichtung für die Behandlung von Proben in Probenbehältern unter Vakuum gemäß der im Oberbegriff des Anspruches 1 angegebenen Art sowie ein Verfahren zum Behandeln von Proben.

Mittels bereits bekannter Vorrichtungen für die Behandlung von Proben in Probenbehältern unter Vakuum werden aus biologischen/organischen/anorganischen Proben in Probenbehältern Flüssigkeiten durch Verdampfung entfernt. Beispielsweise der *"Vortex Vacuum Concentrator"* der Firma Hettich bildet so eine gattungsgemäße Vorrichtung, die während der Behandlung eine Schüttelbewegung ausführt. Diese Vorrichtungen werden auch Vakuum-Schüttler genannt.

Diese gattungsgemäße Vorrichtung weist in einem vakuumdichten Kessel eine darin angeordnete Schütteleinrichtung auf, die mit Probenbehälter-Aufnahmen versehen ist, in die Probenbehälter mit Proben zum Schütteln im Vakuum eingebracht werden können. Der Kessel ist über eine entsprechende Dichtung mit einem Deckel vakuumdicht verschließbar. Der Kessel wird für die Schüttelbewegung evakuiert, bis der gewünschte Unterdruck eingestellt ist. Um eine vakuumdichte Abdichtung des Kessels mit der darin befindlichen Schütteleinrichtung zu gewährleisten, wird z.B. die Schütteleinrichtung mit einem außerhalb des Kessels liegenden Motor über eine Magnetkupplung magnetisch gekoppelt, um darüber die Schütteleinrichtung im Kessel anzutreiben. Am Kessel kann zudem eine oder mehrere Heizungen zur Temperierung der Schütteleinrichtung, der Probenbehälter und der darin befindlichen Proben vorhanden sein. Bekannt sind u.a. Wärmestrahler, wie z. B. Licht mit einem hohen IR-Anteil, die durch einen transparenten Deckel in den Vakuumraum mit den Proben strahlen, oder eine Beheizung der Wände oder des Bodens des Vakuumraums bewirken.

Bei diesen Vorrichtungen sind auch temperierbare Probenbehälter-Aufnahmen bekannt, die ihre Wärme überwiegend durch direkten Kontakt auf die Probenbehälter übertragen.

Die Proben bestehen normalerweise aus Flüssigkeiten, in denen Feststoffe gelöst und/oder dispergiert sind. Die Flüssigkeiten können leicht- oder schwerflüchtige organische Lösungsmittel, Wasser oder ein Gemisch der vorgenannten sein, welche im Vakuum verdampft werden. Nach Befüllen der Probenbehälter, wie z.B. Reagenzgläser, oder Kunststoff-Vials mit den Proben werden diese in die Probenbehälter-Aufnahme des Vakuum-Schüttlers eingebracht, der Schüttelprozess gestartet und das gewünschte Vakuum im Kesselinnenraum hergestellt. Es erfolgt eine fortdauernde Evakuierung des Kessels mit einer Vakuumpumpe, um die verdampfte Flüssigkeit aus dem Kessel zu entfernen und das gewünschte Vakuum trotz der Verdampfung aufrechtzuerhalten. Die Lösungsmittel und/oder das Wasser werden über einen Anschluss mittels einer Vakuumpumpe am Kessel aus dem Kessel entfernt. Damit beispielsweise das Lösungsmittel nicht die Vakuumpumpe beschädigt, kann eine Kühlfalle zwischen der Vakuumpumpe und dem Kessel vorgesehen werden. Das anzulegende Vakuum wird den zu verdampfenden Flüssigkeiten angepasst und kann, wenn gewünscht, auch während des Prozesses weiter angepasst werden.

Das Verdampfen der Flüssigkeiten unter Vakuum mithilfe dieser Vorrichtung hat den Vorteil, dass durch das Vakuum die Siedetemperatur der Flüssigkeiten verringert wird. Es erfolgt somit ein Verdampfen der Flüssigkeit bei niedrigerer Temperatur, so dass die biologischen/organischen/anorganischen Proben nicht oder zumindest geringer thermisch beeinflusst werden. Zudem erfolgt die Verdampfung der Flüssigkeiten schneller. Die Flüssigkeitsbewegung, die bei der Schüttelbewegung in den Probengefäßen erzeugt wird, vergrößert die Oberfläche der Probe, wodurch die Verdampfung schneller abläuft.

Zudem wird durch die Schüttelbewegung die Probe kontinuierlich vermischt. Dadurch werden Temperaturunterschiede in der Probe, die zum Beispiel durch einen Wärmeeintrag der Probenbehälter-Aufnahme oder durch eine Abkühlung der Probenoberfläche durch die Verdunstungskälte zustande kommen können, effizient ausgeglichen. Hierdurch wird der Prozess des Verdampfens besser steuerbar und macht diesen im Falle der Abkühlung durch Verdunstungskälte auch effizienter. Die lokale Abkühlung der Probe an der Oberfläche durch die sogenannte Verdampfungskälte wird somit vermindert. Zudem wird auf diese Weise sehr rasch eine gleichmäßige Probentemperatur erreicht, auch wenn die Probengefäße in einem Heizblock stehen und/oder durch eine Wärmequelle bestrahlt werden. Die rasche Verteilung der Wärme im gesamten Flüssigkeitsvolumen sorgt auch für eine insgesamt bessere Wärmeübertragung in die Probe.

Die Schüttelbewegung verhindert auch die sogenannte *"Schollenbildung"* auf der kühlen Oberfläche von Proben aufgrund des Ausfallens von vormals gelösten Inhaltsstoffen durch die gleichmäßige Verteilung der ausgefallenen Substanzen in dem Probenbehälter. Aber auch durch eine Verringerung der bereichsweisen Abkühlung wird das Ausfallen der Substanzen vermindert oder sogar verhindert.

Weiterhin wirkt die Schüttelbewegung dem sogenannten Überschäumen der Proben (Siedeverzug) entgegen. Ein solches Überschäumen tritt häufig auf, wenn die Probe auf die Siedetemperatur bzw. in die Nähe der Siedetemperatur erwärmt wurde, insbesondere, wenn sich ungelöste Substanzen in der Flüssigkeit befinden oder wenn gelöste Substanzen ab einer bestimmten Konzentration und insbesondere in Verbindung mit einer lokalen Abkühlung beginnen auszufallen bzw. auszukristallisieren. Diese Effekte werden durch die gleichmäßige Temperatur und durch die gleichmäßige Verteilung der gelösten Substanzen in der Probe durch die Schüttelbewegung vermindert bzw. hinausgezögert.

Vorteilhaft an der Nutzung dieses bekannten Vakuum-Schüttlers ist, dass durch den Schüttelprozess eine orbitale Bewegung, eine sogenannte Vortex-Bewegung, der Flüssigkeit erreicht werden kann, wodurch die Oberfläche der Probe im Probengefäß vergrößert wird, was wiederum die Verdampfungsgeschwindigkeit erhöht.

Ein weiterer technischer Vorteil dieses bekannten Vakuum-Schüttlers ist, dass im Gegensatz zu einer Vakuum-Zentrifuge, bei der die Probenbehälter-Aufnahmen auf einen Kreis um die Rotorachse begrenzt sind oder ggfs. mehrere Kreise um die Rotorachse begrenzt sind, über die gesamte Grundfläche der Schütteleinrichtung Probenbehälter-Aufnahmen vorgesehen werden können und diese mit Proben enthaltenden Probenbehältern bestückt werden können. Bei gleicher Geometrie des Vakuumraums ermöglicht dies eine höhere Zahl an Probenbehältern. Zudem können sehr einfach Probengefäße unterschiedlicher Geometrie gleichzeitig in den Vakuum-Schüttler eingebracht werden. Auch ist es im Gegensatz zu einer Vakuum-Zentrifuge, bei der die Massen der Proben aufgrund der Unwuchtproblematik ausgeglichen sein sollten, möglich, dass Probengefäße mit unterschiedlichen Mengen an Proben gleichzeitig behandelt werden können.

Nachteilig an den bekannten Vakuum-Schüttlern ist, dass es schwierig ist, die richtige Frequenz der Schüttelbewegung einzustellen, mit der eine ungestörte orbitale Bewegung der Probenoberfläche erreicht werden kann. Eine nicht optimale orbitale Bewegung verringert die erreichbare Oberflächenvergrößerung und verlängert den Verdampfungsprozess. Die Einstellung der optimalen Frequenz der Schüttelbewegung ist insbesondere schwierig bei Probenbehältern mit kleinem Durchmesser, wie z.B. häufig bei Kunststoffvials, die häufig im Bereich der Biochemie verwendet werden, insbesondere bei sog. Mikrotiterplatten. Bei Gefäßen mit einem kleinen Durchmesser muss eine eher hohe Frequenz gewählt werden, um eine orbitale Bewegung der flüssigen Probe im Probenbehälter zu erzwingen. Dabei wird die genaue Einstellung der notwendigen Frequenz noch zusätzlich erschwert, weil die Probenbehälter für die korrekte Einstellung beobachtet werden müssen, was in den meisten Fällen nicht möglich ist. Nahezu unmöglich ist eine korrekte Einstellung der Frequenz der Schüttelbewegung, wenn Probenbehälter mit unterschiedlichen Durchmessern als auch unterschiedlich befüllten Probenbehälter in den Vakuum-Schüttler eingebracht werden, was eigentlich einer der Vorteile dieser Art von Vakuum-Verdampfung darstellt.

Weiterhin problematisch ist der Prozess der Einstellung der Frequenz der Schüttelbewegung durch die fortlaufende Veränderung der physikalischen Eigenschaften der Probe während des Verdampfens. Beispielsweise führt eine Erhöhung der Konzentration der gelösten Inhaltsstoffe zu einer Erhöhung der Viskosität der Probe. Ebenso können dispergierte Inhaltsstoffe die Fließeigenschaften der Probe verändern. Diese Veränderungen der Probe verlangen ein ständiges Anpassen der Frequenz der Schüttelbewegung, was in der Praxis nicht einfach zu realisieren ist.

Bekannt ist, dass durch die Schrägstellung eines rotierenden Probenhalters, beispielsweise bei Rotationsverdampfern eine Vergrößerung der Oberfläche zur Verbesserung der Vakuum-Verdampfung erreicht wird. Dadurch fließen flüssige Proben in dem Probenbehälter durch die Schwerkraft fortlaufend in eine Richtung, wodurch kontinuierlich ein zusätzlicher Teil des Inneren des Probenbehälters mit der Flüssigkeit benetzt wird. Dadurch wird zusätzlich zur Oberflächenvergrößerung durch die Schrägstellung der Probenbehälter, die zur Verdampfung zur Verfügung stehende Flüssigkeitsoberfläche weiter vergrößert. Durch dieses Vorgehen kann auf einfache Weise eine optimale und reproduzierbare Verdampfung im Probenbehälter sichergestellt werden, wobei die erzielbare Oberflächenvergrößerung in weiten Bereichen unabhängig von der Rotationsgeschwindigkeit der Probenbehälter sowie von der Veränderung der Viskosität der Probe ist. Die Vakuum-Kammer bei einem Rotationsverdampfer ist gleichzeitig der Probenbehälter.

Nachteilig hieran ist, dass spezielle, vakuumfeste Probenbehälter, wie z.B. Kolben benötigt werden. Probenbehälter unterschiedlicher Formen und auch solche aus Kunststoff sind beispielsweise nicht geeignet.

Problematisch ist weiterhin, dass üblicherweise immer nur ein Probenbehälter verwendet werden kann, der mit dem Rotationsverdampfer über einen sog. Schliff vakuumfest verbunden wird. Ein gleichzeitiges Abdampfen unterschiedliche Proben ist somit aufwendig und nur möglich, wenn einen sog. Spinne eingesetzt wird. Dies ist eine Vorrichtung, die auf der einen Seite mit einem Schliff mit dem Rotationsverdampfer verbunden wird, auf der anderen Seite aber mehrere kleinere Schliffverbindungen aufweist, an die kleinere Vakuumfeste Gefäße angebracht werden können, die wiederum einen Schliff aufweisen müssen. Einfache Gefäße können also nicht eingesetzt werden. Um Vakuumdichtigkeit zu erreichen, müssen zudem alle Schliff-Verbindungen genutzt werden, eine flexible Anzahl an Gefäßen kann also auch hier nicht eingesetzt werden.

Durch die Drehung der gesamten Vakuum-Kammer, beispielsweise eines Vakuum-Kolbens, ist es zudem erforderlich, dass dieser mit einem drehbarem Vakuum-Rohr verbunden ist, welcher von einer Antriebseinheit in Längsrotation versetzt wird und die Vakuum-Kammer mit einer Kühlereinheit und dem Auffangkolben für die Lösungsmittel verbindet. Daher muss sich das Vakuum-Rohr in einer dicht sitzenden Manschette drehen, um das Vakuum gegenüber dem außerhalb des Gerätes herrschenden Normaldruck abzudichten. Dieses ist aufgrund der Drehung des Vakuum-Rohrs nicht immer problemlos möglich, die Erzeugung eines Hochvakuums im Probengefäß ist mit Rotationsverdampfern üblicherweise nicht möglich. Üblicherweise wird unter optimalen Bedingungen ein Vakuum-Druck im einstelligen mbar-Bereich erreicht.

Aus der JP 2009 220875 A ist eine Abfüllvorrichtung bekannt, welche ein flüssiges Material, das einer Knet- und Entschäumungsbehandlung unterzogen wurde, mit einem hohen Grad an Genauigkeit in einen Behälter ohne Einschluss einer Luftblase einbringen kann. Ein einziger Probenbehälter ist vorgesehen. Dieser enthält das flüssige, abzufüllende Material. Der Probenbehälter ist in einem einzigen Probenhalter angeordnet. Der Probenhalter dreht um eine erste Rotationsachse der Vorrichtung sowie um eine zweite Rotationsachse, welche mit der Längsachse des Probenhalters identisch ist. In den Probenbehälter kommt das zu befüllende Gefäß, welches mit einer Presseinheit verbunden ist. Das zu befüllende Gefäß hat am unteren Ende eine Befüllöffnung. Mit der erzeugten Zentrifugalkraft wird das zu befüllende Gefäß in den Probenbehälter gedrückt und das abzufüllende Material durch die Befüllöffnung in den zu befüllenden Behälter überführt. Die Neigung der Probenhalterachse dient dazu, das zu befüllende Gefäß durch Zentrifugalkraft in Richtung Boden des Probenbehälters zu bewegen und dadurch die Befüllung des zu befüllenden Gefäßes durch die Befüllöffnung durchzuführen.

Aus der US 3 304 990 A ist ein Rotationsverdampfer bekannt, der einen kontaktfreien Antrieb offenbart.

Aus der US 2007/0025180 A1 betrifft eine Vorrichtung zum Entlüften von Flüssigkeiten. Die Rotationsbewegung erfolgt über ein Zahnräder aufweisendes Getriebe.

Aus der US 2020/0131460 A1 eine Vorrichtung zum Lösen eines Gases in einer flüssigen Kulturlösung. Hierfür wird eine Wipp-Bewegung um zwei horizontale Achsen und eine Drehbewegung um eine vertikale Achse durchgeführt, wofür entsprechende Gelenke vorgesehen sind.

Der Erfindung liegt die Aufgabe zugrunde, eine Vorrichtung gemäß der im Oberbegriff des Anspruches 1 angegebenen Art derart weiterzubilden, dass unter Vermeidung der genannten Nachteile der Verdampfungsprozess während der Behandlung der Proben unter Vakuum ohne zusätzliche Temperaturerhöhung verbessert wird.

Diese Aufgabe wird für eine Vorrichtung nach der Erfindung durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass dieses Prinzip der Oberflächenvergrößerung in einem Vakuum-Raum in mehreren, separaten Probenbehältern gleichzeitig und sehr einfach ausgeführt wird.

Nach der Erfindung ist die Vorrichtung für die Behandlung von Proben in Probenbehältern unter Vakuum, bei der aus Proben in Probenbehältern Flüssigkeiten durch Verdampfung entfernt werden, mit einem Gehäuse und einer im Gehäuse angeordneten Vakuumkammer versehen, die mit einer Vakuumpumpe zusammenwirkt. Über einen Deckel ist die Vakuumkammer vakuumdicht verschließbar und kann zum Be- und Entladen der Probenbehälter geöffnet werden. Zudem ist ein Probenhalter mit einer Grundfläche und mit mehreren Probenbehälter-Aufnahmen für die Aufnahme von Probenbehältern vorgesehen. In die Probenbehälter-Aufnahmen ist jeweils ein Probenbehälter mit einer zu behandelnden Probe einbringbar. Die Probenbehälter-Aufnahmen sind durch Ausnehmungen im Probenhalter gebildet. Eine Probenhalterachse verläuft dabei senkrecht zu der Grundfläche des Probenhalters. Weiterhin ist eine in der Vakuumkammer gelagerte Antriebseinheit vorgesehen, die mit dem Probenhalter verbunden ist und den Probenhalter um eine Längsachse der Vakuumkammer bewegt. Außerhalb der Vakuumkammer ist ein Antriebsmechanismus angeordnet, der mit der Antriebseinheit triebschlüssig gekoppelt ist. Erfindungsgemäß ist die Antriebseinheit mit dem Probenhalter über einen Halterstab verbunden. Die Probenhalterachse bildet die Mittelachse des Halterstabs. Die Probenhalterachse des Probenhalters ist zwischen einem vorbestimmten, spitzen Halterwinkel zu der Längsachse der Vakuumkammer taumelnd ausgebildet. Der Halterstab ist über ein gegenüber dem Probenhalter und der Antriebseinheit beabstandet angeordnetes Gelenk geführt gelagert. Das Gelenk ermöglicht die Drehbewegung des Probenhalters mit dem Halterstab um zwei horizontale, zueinander im rechten Winkel ausgerichtete Achsen.

Durch die Festlegung des Halterwinkels lässt sich eine optimale Oberflächenvergrößerung in den Probenbehältern einstellen und dadurch das Vakuum-Verdampfen von Flüssigkeiten beschleunigen. Vor allem durch die Taumelbewegung um die Längsachse werden die Seitenwände der Probenbehälter großflächig und kontinuierlich mit Flüssigkeit benetzt. Durch das Gelenk wir eine zielgerichtete Taumelbewegung ermöglicht.

Die Grundfläche des Probenhalters ist die Projektion des Außenumfangs des Probenhalters auf eine Ebene.

Beim Bewegen des Probenhalters durch den Antriebsmechanismus um die Probenhalterachse durchläuft die flüssige Probe aufgrund der einwirkenden Schwerkraft eine relative Orbitalbewegung in Bezug auf den Probenbehälter, wobei die Art der Orbitalbewegung der flüssigen Probe in erster Näherung nicht von der Geschwindigkeit der Bewegung abhängig ist. Durch die so erzeugten relativen Orbitalbewegungen der Probe werden weitere Teile der inneren Oberfläche der Probenbehälter benetzt, was wiederum zu einer Vergrößerung der abdampffähigen Oberfläche führt. Die Oberflächenvergrößerung ist umso höher, je größer der Winkel des Probenhalters und somit der Probenbehälter zu der Senkrechten ist. Dies betrifft die Oberflächenvergrößerung in Ruhe und die Oberflächenvergrößerung durch die relative Orbitalbewegung.

Vorzugsweise liegt der Halterwinkel dabei in einem vorbestimmten Bereich von einschließlich 8° bis einschließlich 85° zur Senkrechten. Insbesondere weist der Halterwinkel 40° auf. Bei einem zu geringen Winkel reicht die Orbitalbewegung nicht aus, um eine signifikante Oberflächenvergrößerung herbeizuführen. Bei einem zu großen Winkel führt die Orbitalbewegung nicht zu einer Benetzung der Oberfläche, sondern eine große Menge an Flüssigkeit fließt über die Oberfläche, sodass ein Vorteil beim Abdampfen nicht mehr besteht.

Bevorzugt ist die Probenhalterachse und der Halterstab um die Längsachse der Vakuumkammer bewegbar gelagert, wobei die Längsachse eine Taumelachse bildet. Hierdurch wird eine Taumelbewegung des Probenhalters um die Längsachse realisiert.

Gemäß einer weiteren vorteilhaften Ausbildungsform der Erfindung weisen die Probenhalter-Aufnahmen jeweils eine Aufnahmeachse auf, die als Längsachsen ausgebildet sind. Die Aufnahmeachsen der Probenbehälter-Aufnahmen sind dabei zueinander parallel ausgerichtet. Hierdurch wird erreicht, dass alle Proben in den Probenbehältern in den Probenbehälter-Aufnahmen in gleicher Weise behandelt werden. Denkbar ist aber auch, dass die Aufnahmeachse unterschiedlich ausgerichtet sind, beispielsweise für unterschiedliche Durchmesser der Probenbehälter-Aufnahmen für unterschiedliche Größen von Probenbehältern oder für unterschiedliche Geometrien von Probenbehältern.

Um eine einfache Winkeleinstellung der Aufnahmeachsen der Probenbehälter über die Probenhalterachse zu erreichen, ist die Probenhalterachse parallel zu den Aufnahmeachsen von allen Probenbehälter-Aufnahmen ausgerichtet.

Vorzugsweise ist die Probenhalterachse parallel zu den Aufnahmeachsen aller Probenbehälter-Aufnahmen ausgebildet.

Gemäß einer weiteren vorteilhaften Ausbildungsform der Erfindung ist eine mit der Antriebseinheit zusammenwirkende Antriebswelle vorgesehen, welche die Taumelbewegung des Probenhalters über den Halterstab um die Längsachse erzeugt.

Vorzugsweise wirkt die Antriebswelle mit einem Getriebe zur Übertragung der Rotationsbewegung zusammen.

Bevorzugt weist das Getriebe ein erstes mit der Antriebswelle verbundenes Zahnrad und ein zweites mit dem Probenhalter verbundenes Zahnrad auf, wobei das erste und das zweite Zahnrad triebschlüssig ineinandergreifen. Über den Durchmesser der jeweiligen Zahnräder kann die Übersetzung oder Untersetzung eingestellt werden. Hierbei kann der Halterstab mit dem zweiten Zahnrad verbunden sein.

Um eine einfache Einstellung der Bewegungsgeschwindigkeit der Probe in dem Probenbehälter zu realisieren, bildet das Getriebe ein Übersetzungs- oder Untersetzungsgetriebe.

Das Gelenk kann in einem mit der Vakuumkammer verbundenen Gelenkhalter angeordnet sein.

Gemäß einer weiteren vorteilhaften Ausbildungsform der Erfindung ist der Antriebsmechanismus und die Antriebseinheit über eine kontaktfreie Kupplung miteinander gekoppelt. Hierdurch sind aufwendige Dichtungen für Durchbrüche in die Vakuumkammer zum Antrieb der Antriebseinheit nicht notwendig.

Um das Verdampfen in der Vakuumkammer zu erleichtern, ist eine Einrichtung zum Erwärmen der Vakuumkammer vorgesehen. Dies kann beispielsweise ein IR-Strahler sein, welcher insbesondere von oben auf die Vakuumkammer gerichtet ist. Zusätzlich oder alternativ können auch Heizungen in den Boden oder die Wände der Vakuumkammer eingebaut sein. In einer besonderen Ausführungsform kann auch eine Heizung in den Probenhalter der Taumelvorrichtung eingebaut sein, da dieser Probenhalter seine relative Winkelposition in der xy-Ebene nicht verändert und somit einfach über ein flexibles Kabel mit Energie versorgt werden kann.

Gemäß einer Ausführungsform der Erfindung ist ein Satz unterschiedlicher Arten von Probenhaltern vorgesehen, wobei jeweils ein Probenhalter lösbar mit der Bewegungseinheit verbindbar ist. Hierdurch ist es möglich, unterschiedliche Probenbehälter mit dem Probenhalter zu verbinden, aber auch unterschiedliche Längsachsen der Probenbehälter-Aufnahmen zur Verfügung zu stellen.

Zudem oder alternativ kann auch ein Satz unterschiedlicher Antriebseinheiten vorgesehen sein, wobei jeweils eine Antriebseinheit lösbar in die Vakuumkammer für unterschiedliche Bewegungen der Proben in den Probenbehältern während der Behandlung von Proben mit dem Probenbehälter verbindbar und mit dem Antriebsmechanismus koppelbar ist. Beispielsweise ist es dadurch möglich, in der Vakuumkammer eine Taumelbewegung des Probenhalters zu verwirklichen.

Gemäß einem Aspekt der Erfindung wird bei einem Verfahren zum Betreiben einer Vorrichtung zum Behandeln von Proben in Probenbehältern unter Vakuum, wie dieses eben beschrieben wurde, bei der Behandlung der Proben eine kontinuierliche Bewegung des Probenhalters um eine Längsachse durchgeführt.

Vorzugsweise wird die Bewegung als Taumelbewegung des Probenhalters um die Längsachse ausgeführt.

Bei der Taumelbewegung des Probenhalters fließen die Proben auf der Innenfläche des Probenbehälters fortlaufend in eine Richtung. Es erfolgt somit eine Orbitalbewegung der Probe relativ zum Probenbehälter.

Bevorzugt treibt die Antriebseinheit den Probenhalter um die Längsachse mit einer Taumelfrequenz von 0,5 bis 150 U/min an.

Gemäß einem weiteren Aspekt der Erfindung werden bei einem Verfahren zum Entfernen von Flüssigkeiten aus Proben in Probenbehältern durch Verdampfung mittels einer Vorrichtung zum Behandeln von Proben in Probenbehältern unter Vakuum die Probenbehälter so bewegt, dass die Proben auf der Innenfläche des Probenbehälters fortlaufend in eine Richtung fließen. Dies wird dabei vorzugsweise mit einer Vorrichtung durchgeführt, wie sie oben beschrieben wurde.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht von vorne oben auf eine Vorrichtung für die Behandlung von Proben in Probenbehältern unter Vakuum mit einem geschlossenen Deckel nach der Erfindung;
- Fig. 2: eine perspektivische Ansicht von vorne oben auf eine Vorrichtung für die Behandlung von Proben in Probenbehältern unter Vakuum mit einem geöffneten Deckel nach der Erfindung;
- Fig. 3: eine schematische perspektivische Teilschnittansicht der Erfindung;
- Fig. 4: eine weitere schematische Ansicht von vorne mit Teilschnitt nach Fig. 3;
- Fig. 5: eine schematische Seitenansicht mit Teilschnitt nach Fig. 3;
- Fig. 6: eine weitere schematische Ansicht von der Seite mit Teilschnitt nach Fig. 3;
- Fig. 7: eine weitere schematische Ansicht von oben nach Fig. 3, und
- Fig. 8: eine schematische Detailansicht auf ein Getriebe und dem Antriebsmechanismus nach Fig. 3.

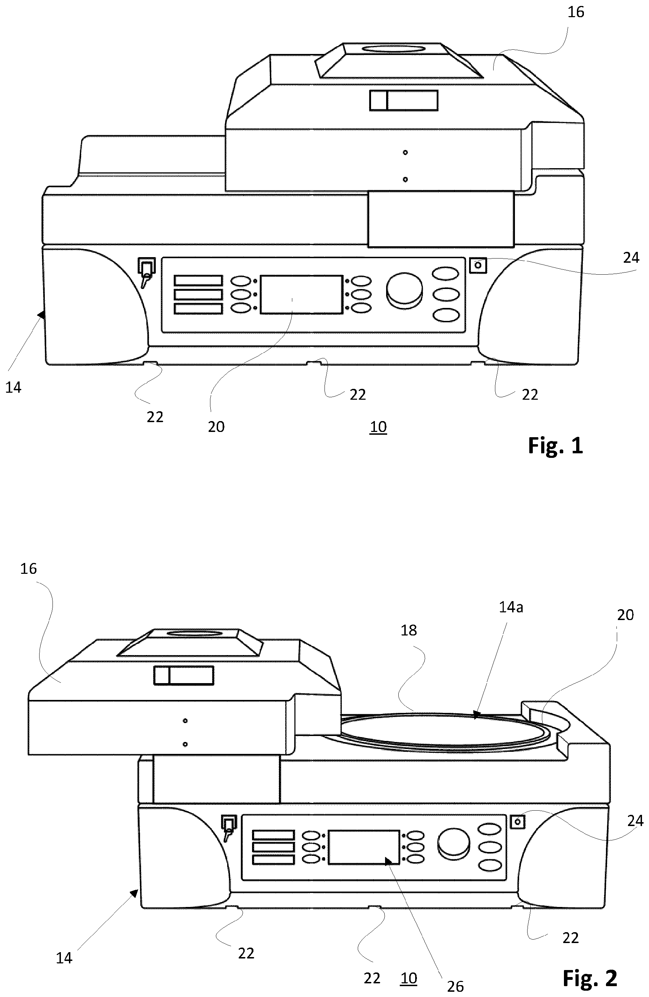

In den Figuren ist eine Vorrichtung 10 für die Behandlung von Proben in Probenbehältern 12 unter Vakuum nach der Erfindung dargestellt. Die Vorrichtung 10 umfasst ein Gehäuse 14 mit einem Deckel 16, der über einen hier im Einzelnen nicht dargestellten Schließ- und Öffnungsmechanismus an dem Gehäuse 14 zwischen einer Öffnungsposition, siehe Fig. 2, und einer Schließposition, siehe Fig. 1, verschiebbar ist. Der Deckel 16 verschließt eine im Gehäuse 14 angeordnete Vakuumkammer 14a vakuumdicht. Im geöffneten Zustand wird die Vorrichtung 10 so weit freigegeben, dass ein Be- und Entladen mit Probenbehältern 12 möglich ist.

In dem Gehäuse 14 ist ein Sicherheitskessel 18 angeordnet, der im Boden 18a eine Öffnung aufweist, welche über Vakuum-Leitungen mit einer Vakuumpumpe in bekannter Weise zusammenwirkt. An die Vakuumpumpe ist eine Abluftleitung angeschlossen, die in die Umgebung mündet. Der Sicherheitskessel 18 und der Deckel 16 begrenzen die Vakuumkammer 14a, in der unter Vakuum die Behandlung der Proben in Probenbehältern 12 stattfindet.

Die Vakuumpumpe kann außerhalb des Gehäuses 14 oder innerhalb des Gehäuses 14 angeordnet sein. Derartige Vorrichtungen mit Vakuumpumpen sind grundsätzlich bekannt, sodass hierauf nicht näher eingegangen wird.

Der Sicherheitskessel 18 weist in seinem oberen Bereich eine Dichtung 20 auf, welche mit einer hier nicht dargestellten Dichtung im Deckel 16 zusammenwirkt und bedarfsweise ein Vakuum innerhalb des Sicherheitskessel 18 bei geschlossenem Deckel 16 gewährleistet, indem der Deckel 16 die Vakuumkammer 14a vakuumdicht verschließt.

Das Gehäuse 14 ist auf Füßen 22 angeordnet, welche unterhalb des Gehäuses 14 vorgesehen sind. Über einen Netzschalter 24 wird die Vorrichtung 10 an- und ausgeschaltet. Über ein Touch-Display 26 wird die Betriebsweise der Vorrichtung 10 eingestellt.

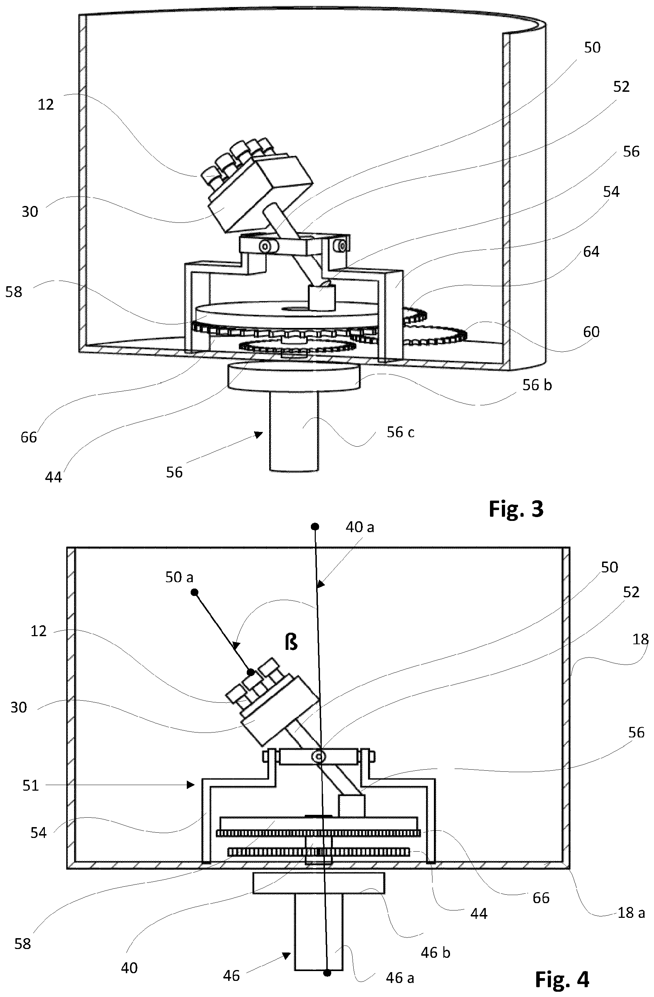

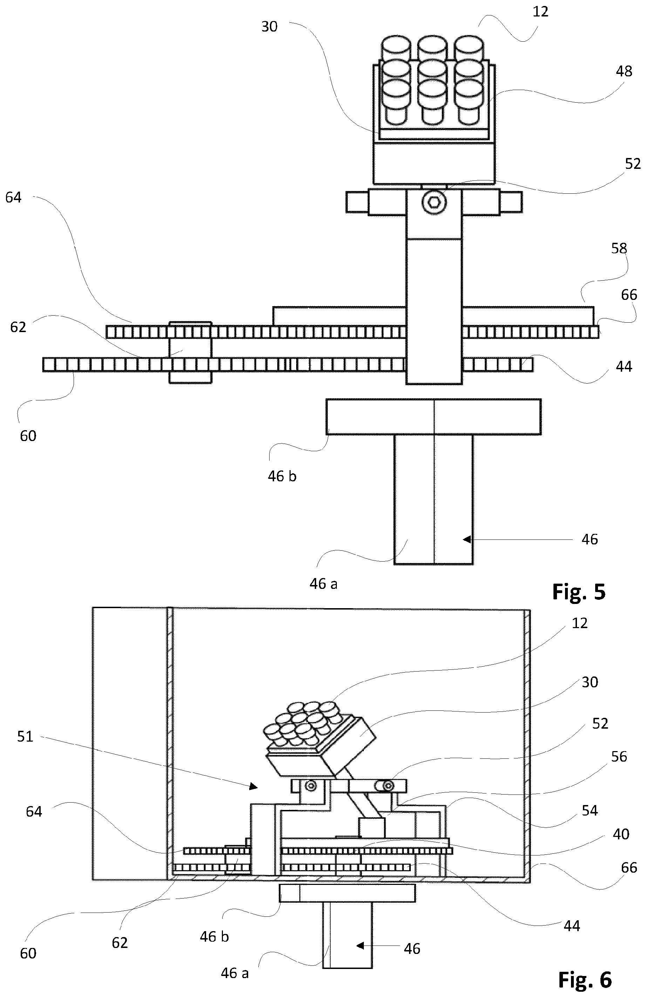

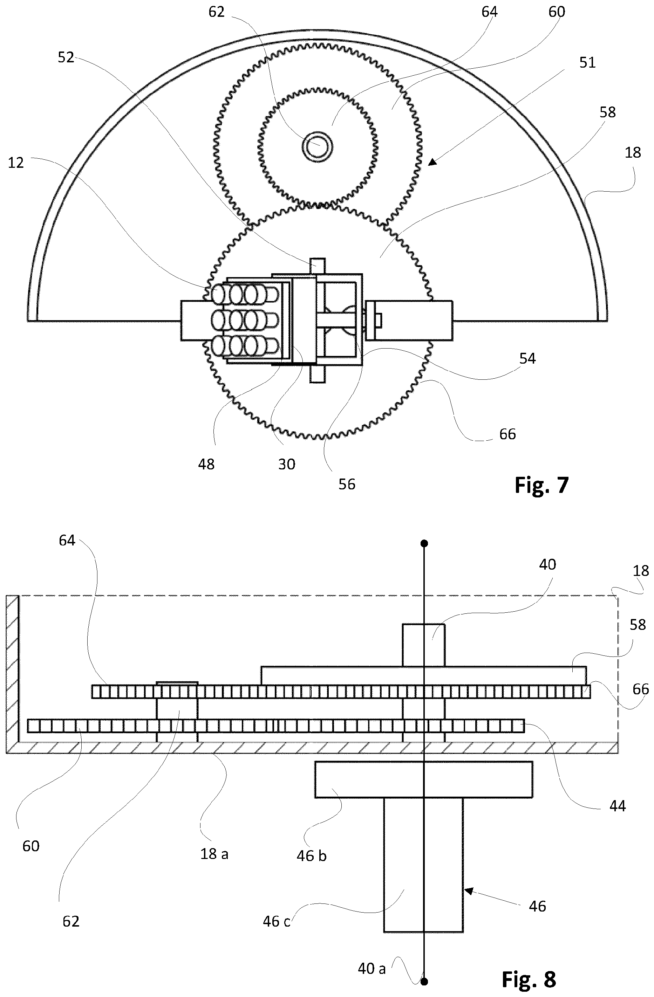

In den Figuren 3 bis 8 ist eine erfindungsgemäße Vorrichtung dargestellt, bei dem die Proben in den Probenbehältern 12 mittels einer Taumelbewegung während der Behandlung bewegt werden.

In dem Sicherheitskessel 18 ist der Probenhalter 30 mit einem sich vom Probenhalter 30, also seiner Grundfläche, senkrecht nach unten erstreckenden Halterstab 50 versehen, der mit einer Antriebseinheit 51 triebschlüssig verbunden ist.

Der Halterstab 50 ist konzentrisch zu einer senkrecht zur Grundfläche des Probenhalters 30 verlaufenden Halterachse 50a angeordnet. In etwa der Mitte des Halterstabs 50 ist ein Gelenk 52 vorgesehen, welches eine Drehbewegung des Probenhalters 30 mit dem Halterstab 50 um zwei horizontale, zueinander im rechten Winkel ausgerichtete Achsen ermöglicht. Das Gelenk 52 ist mit einem Gelenkhalter 54 verbunden, der konzentrisch zur Antriebsachse 40a angeordnet und mit dem Boden 18a des Sicherheitskessels 18 verbunden ist. Über ein Kugelgelenk 56 ist das freie Ende der Halterachse 50 mit einer Antriebsscheibe 58 verbunden, wobei das Kugelgelenk 56 und somit das eine freie Ende des Halterstabs 50 radial versetzt zur Antriebsachse 40a angeordnet ist.

Die Antriebsscheibe 44 ist Teil eines Untersetzungsgetriebes. Die Antriebsscheibe 44 im Bereich des Bodens 18a angeordnet, jedoch ist diese gegenüber der Antriebswelle 40 frei drehbar gelagert. In der Antriebsscheibe 44 ist ein hier nicht näher dargestellter magnetisierbarer Stab integriert, der quer zur Antriebswelle 40 verläuft. Die Antriebswelle 40 ist drehbar um die Längsachse 40a auf dem Boden 18a im Sicherheitskessel 18 gelagert. Der magnetisierbare Stab verläuft beiderseits der Längsachse 40a und ist symmetrisch hierzu angeordnet.

Die Antriebsscheibe 44 treibt ein Zahnrad 60 an. Über eine mit dem Zahnrad 60 fest verbundene und konzentrisch zum Zahnrad 60 angeordnete Welle 62, die am Boden 18a des Sicherheitskessel 18 drehbar gelagert ist, wird ein konzentrisch zur Welle 62 und mit dieser fest verbundenes Zahnrad 64 angetrieben. Dieses Zahnrad 64 treibt wiederum ein fest mit der Antriebswelle 40 verbundenes Zahnrad 66 an, das auch mit der Antriebsscheibe 58 fest verbunden ist. Die Antriebsscheibe 58, das Zahnrad 66 sowie die Antriebswelle 40 sind konzentrisch zu der Längsachse 40a angeordnet.

Die Antriebswelle 40 wird durch magnetische Kraftkopplung angetrieben. Hierfür ist außerhalb des Sicherheitskessels 18 und somit der Vakuumkammer 14a unter dem Boden 18a konzentrisch zu der Längsachse 40a der elektrische Antrieb 46 vorgesehen. Über den elektrischen Antrieb 46 wird die als Zahnrad ausgebildete Antriebsscheibe 44 mit dem integrierten magnetisierbaren Stab berührungslos über entsprechende Magnetfelder angetrieben. Der elektrische Antrieb 46 weist dafür ebenfalls den Motor 46a und den durch den Motor 46a angetriebenen stabförmigen Magneten in einer Magnetscheibe 46b auf. Die Antriebsscheibe 44 wird über magnetische Kraftkopplung durch den elektrischen Antrieb 46 angetrieben, wodurch das Zahnrad 60, die Welle 62, das Zahnrad 64 und darüber das Zahnrad 66 und somit die Antriebswelle 40 mit der Antriebsscheibe 58 ebenfalls angetrieben werden. Über die Antriebsscheibe 58 wird das Ende des Halterstabs 50 gedreht und der mit dem Halterstab 50 fest verbundene Probenhalter 30 führt eine Taumelbewegung aus, d.h. der Probenhalter 30 taumelt um eine Taumelachse, welche der Längsachse 40a entspricht.

Die Halteachse 50a und somit der Halterstab 50 bilden in einer Taumelendposition einen maximalen Winkel β zur Längsachse 40a von 45°, siehe Fig. 4. Die Halterachse 50a und die Längsachse 40a, welche die Taumelachse ist, bilden zueinander diesen Winkel β, da die Längsachse 40a senkrecht ausgerichtet ist. Über diesen Winkel taumelt im Betrieb der Probenhalter 30 in der Seitenansicht von Fig. 4.

Es ist auch denkbar, dass der Halterstab 50 einen Winkel zwischen 8° und 85° zur Längsachse 40a bildet.

Der Probenhalter 30 ist rechteckig ausgebildet (andere Geometrien sind auch möglich) und weist eine Vielzahl von Probenbehälter-Aufnahmen 48 auf, in denen jeweils ein Probenbehälter 12 mit einer zu behandelnden Probe eingebracht werden kann. Die Probenbehälter-Aufnahmen 48 werden durch Ausnehmungen im Probenhalter 30 gebildet, deren Längsachse senkrecht zur Grundfläche des Probenhalters 30 und somit parallel zur Halterachse 50a verläuft. Somit sind die Probenbehälter 12 mit ihren Längsachsen in dem Probenhalter 30 alle zueinander parallel ausgerichtet. Die Längsachsen der Probenbehälter 12 sowie der Probenbehälter-Aufnahmen 48 sind parallel zur Halterachse 50a ausgerichtet.

Senkrecht und mittig zur Grundfläche des Probenhalters 30 erstreckt sich die Halterachse 50a.

Während der Behandlung der flüssigen Probe mit der erfindungsgemäßen Vorrichtung 10 werden aus biologischen/organischen/anorganischen Proben in Probenbehältern 12 Flüssigkeiten durch Verdampfung entfernt. Durch das Vakuum verringert sich die Siedetemperatur der Flüssigkeiten. Es erfolgt somit ein Verdampfen der Flüssigkeit bei niedrigerer Temperatur, sodass die biologischen/organischen/anorganischen Proben nicht oder zumindest geringer beeinflusst werden. Zudem erfolgt die Verdampfung der Flüssigkeiten schneller.

Die Proben bestehen normalerweise aus Flüssigkeiten, in denen Feststoffe gelöst und/oder dispergiert sind. Die Flüssigkeiten können leicht- oder schwerflüchtige organische Lösungsmittel, Wasser oder ein Gemisch des Vorgenannten sein, welche im Vakuum verdampft werden. Nach Befüllen der Probenbehälter 12, wie z.B. Reagenzgläser, Kunststoff-Vials, Mikrotiterplatten, Erlenmeyer-Kolben, Bechergläser, Rundkolben, etc., mit den Proben werden diese in den Probenhalter 30 der Vorrichtung 10 eingebracht. Die Taumelbewegung wird gestartet und das gewünschte Vakuum in der Vakuumkammer 14a hergestellt. Es erfolgt eine fortdauernde Evakuierung des Sicherheitskessels 18 mit der Vakuumpumpe, um die verdampfte Flüssigkeit aus der Vakuumkammer 14a zu entfernen und das gewünschte Vakuum trotz der Verdampfung aufrechtzuerhalten. Während der Bewegung des Probenhalters 30 verdampfen die Lösungsmittel und/oder das Wasser, welches über die Öffnung im Boden 18a des Sicherheitskessels 18 zur Vakuumkammer 14a mittels der Vakuumpumpe 26 aus der Vakuumkammer 14a entfernt wird. Das anzulegende Vakuum wird den zu verdampfenden Flüssigkeiten angepasst und kann, wenn gewünscht, auch während des Prozesses weiter angepasst werden.

In der Vorrichtung 10 kann zudem eine Heizung zur Temperierung des Rotors 12 und der Probenbehälter 12 mit den darin befindlichen Proben vorhanden sein. Bekannt sind u.a. Wärmestrahler, wie z. B. Licht mit einem hohen IR-Anteil, die in die Vakuumkammer 14a mit den Proben strahlen. Aus Gründen der Übersicht ist diese Heizung in den Zeichnungen nicht gezeigt.

Die Erfindung zeichnet sich dadurch aus, dass bei der Taumelbewegung die Probenbehälter 12 mit den flüssigen Proben in den Probenbehältern 12 durch die Schwerkraft fortlaufend in eine Richtung fließen. Hierdurch wird kontinuierlich ein zusätzlicher Teil des Inneren des Probenbehälters 12 mit der flüssigen Probe benetzt. Dadurch wird die zur Verfügung stehende Flüssigkeitsoberfläche weiter vergrößert. Durch dieses Vorgehen kann auf einfache Weise eine optimale und reproduzierbare Verdampfung im Probenbehälter 12 sichergestellt werden. Die erzielbare Oberflächenvergrößerung ist in weiten Bereichen unabhängig Taumelgeschwindigkeit der Probenbehälter 12 sowie von der Veränderung der Viskosität der Probe. Die Oberflächenvergrößerung hängt von dem Winkel β und somit von der Taumelbewegung der Probenbehälter 12 ab.

Beim Bewegen des Probenhalters 30 durch den Antriebsmechanismus um die als Taumelachse dienende Längsachse 40a durchläuft die flüssige Probe aufgrund der einwirkenden Schwerkraft eine relative Orbitalbewegung in Bezug auf den Probenbehälter 12. Durch die so erzeugten relativen Orbitalbewegungen der Probe werden weitere Teile der inneren Oberfläche der Probenbehälter 12 benetzt, was wiederum zu einer Vergrößerung der abdampffähigen Oberfläche führt. Die Oberflächenvergrößerung ist umso höher, je größer der Winkel β des Probenhalters 30 und somit der Probenbehälter 12 zu der Senkrechten ist. Dies betrifft die Oberflächenvergrößerung in Ruhe und die Oberflächenvergrößerung durch die relative Orbitalbewegung.

### Bezugszeichenliste

- 10: Vorrichtung
- 12: Probenbehälter
- 14: Gehäuse
- 14a: Vakuumkammer
- 16: Deckel
- 18: Sicherheitskessel
- 18a: Boden des Sicherheitskessels 18
- 20: Dichtung
- 22: Füße der Vorrichtung 10
- 24: Netzschalter
- 26: Touchdisplay
- 28: Träger
- 30: Probenhalter
- 40: Antriebswelle
- 40a: Längsachse
- 44: Antriebsscheibe
- 46: elektrischer Antrieb
- 46a: Motor
- 46b: Magnetscheibe
- 48: Probenbehälter-Aufnahme
- 50: Halterstab
- 50a: Halterachse
- 51: Antriebseinheit
- 52: Gelenk
- 54: Gelenkshalter
- 56: Kugelgelenk
- 58: Antriebsscheibe
- 60: Zahnrad
- 62: Welle
- 64: Zahnrad, welches fest mit der Welle 62 verbunden ist
- 66: Zahnrad, welches fest mit der Antriebswelle 40 verbunden ist

- β: Halterwinkel, Winkel der Halterachse 50a zu einer Senkrechten

## Patentansprüche

1. Vorrichtung für die Behandlung von Proben in Probenbehältern (12) unter Vakuum, bei der aus Proben in Probenbehältern Flüssigkeiten durch Verdampfung entfernt werden,
mit einem Gehäuse (14),
einer im Gehäuse (14) angeordneten Vakuumkammer (14a), die mit einer Vakuumpumpe zusammenwirkt,
einem Deckel (16), über den die Vakuumkammer (14a) vakuumdicht verschließbar ist und zum Be- und Entladen der Probenbehälter (12) geöffnet werden kann,
einem Probenhalter (30) mit einer Grundfläche und mit mehreren Probenbehälter-Aufnahmen (48) für die Aufnahme von Probenbehältern (12), wobei in die Probenbehälter-Aufnahmen (48) jeweils ein Probenbehälter (12) mit einer zu behandelnden Probe einbringbar ist, die Probenbehälter-Aufnahmen (48) durch Ausnehmungen im Probenhalter (30) gebildet sind und eine Probenhalterachse (50a) senkrecht zu der Grundfläche des Probenhalters (30) ausgerichtet ist,
einer in der Vakuumkammer (14a) gelagerten Antriebseinheit (51), die den Probenhalter (30) um eine Längsachse (40a) der Vakuumkammer (14a) antreibt,
eine außerhalb der Vakuumkammer (14a) angeordneten Antriebsmechanismus (46), der mit der Antriebseinheit (51) triebschlüssig gekoppelt ist,
wobei die Antriebseinheit (51) mit dem Probenhalter (30) über einen Halterstab (50) verbunden ist, die Probenhalterachse (50a) als Mittelachse des Halterstabs (50) ausgebildet ist, die Probenhalterachse (50a) des Probenhalters (30) über einen vorbestimmten, spitzen Halterwinkel (β) zu der Längsachse (40a) der Vakuumkammer (14a) taumelnd bewegbar ausgebildet ist, **dadurch gekennzeichnet, dass** der Halterstab (50) über ein gegenüber dem Probenhalter (30) und der Antriebseinheit (51) beabstandet angeordnetes Gelenk (52) geführt gelagert ist, welches die Drehbewegung des Probenhalters (30) mit dem Halterstab um zwei horizontale, zueinander im rechten Winkel ausgerichtete Achsen ermöglicht.

2. Vorrichtung nach Anspruch 1, **dadurch gekennzeichnet, dass** der Halterwinkel (β) vorbestimmt in einem Bereich von einschließlich 8° bis 85° zur Längsachse (40a) liegt, insbesondere dass der Halterwinkel (β) 40° beträgt.

3. Vorrichtung nach einem der vorangehenden Ansprüche, **dadurch gekennzeichnet, dass** die Probenhalterachse (50a) und der Halterstab (50) um die Längsachse (40a) der Vakuumkammer (14a) bewegbar gelagert ist, wobei die Längsachse (40a) eine Taumelachse bildet.

4. Vorrichtung nach einem der vorangehenden Ansprüche, **dadurch gekennzeichnet, dass** die Probenhalter-Aufnahmen (48) jeweils eine Aufnahmeachse aufweisen, die als Längsachsen ausgebildet sind, und die Aufnahmeachsen der Probenbehälter-Aufnahmen (48) zueinander parallel ausgerichtet sind, vorzugsweise die Probenhalterachse (50a) parallel zu den Aufnahmeachsen aller Probenbehälter-Aufnahmen (48) ausgebildet ist.

5. Vorrichtung nach einem der vorangehenden Ansprüche, **dadurch gekennzeichnet, dass** eine mit der Antriebseinheit (51) zusammenwirkende Antriebswelle (40) vorgesehen ist, welche eine Taumelbewegung des Probenhalters (30) über den Halterstab (50) um die Längsachse (40a) erzeugt, insbesondere die Antriebswelle (40) mit einem Getriebe (60, 62, 64, 66) zur Übertragung der Rotationsbewegung zusammenwirkt.

6. Vorrichtung nach Anspruch 5, **dadurch gekennzeichnet, dass** das Getriebe (60, 62, 64, 66) ein erstes mit der Antriebswelle (40) verbundenes Zahnrad (66) und ein zweites mit dem Probenhalter (30) verbundenes Zahnrad (64) aufweist, wobei das erste und das zweite Zahnrad (64; 66) triebschlüssig ineinandergreifen, vorzugsweise der Halterstab (50) mit dem zweiten Zahnrad (64) verbunden ist.

7. Vorrichtung nach Anspruch 5, **dadurch gekennzeichnet, dass** das Getriebe (60, 62, 64, 66) ein Übersetzungs- oder Untersetzungsgetriebe bildet.

8. Vorrichtung nach einem der vorangehenden Ansprüche, **dadurch gekennzeichnet, dass** das Gelenk (52) in einem mit der Vakuumkammer (14a) verbundenen Gelenkhalter (54) angeordnet ist.

9. Vorrichtung nach einem der vorangehenden Ansprüche, **dadurch gekennzeichnet, dass** der Antriebsmechanismus (46) und die Antriebseinheit (51) über eine kontaktfreie Kupplung miteinander gekoppelt sind.

10. Vorrichtung nach einem der vorangehenden Ansprüche, **dadurch gekennzeichnet, dass** eine Einrichtung zum Erwärmen der Probenbehälter (12) und der Proben vorgesehen ist, insbesondere IR-Strahler, welche insbesondere von oben auf die Proben gerichtet sind.

11. Vorrichtung nach einem der vorangehenden Ansprüche, **dadurch gekennzeichnet, dass** ein Satz unterschiedlicher Arten von Probenhaltern (30) vorgesehen ist, wobei jeweils ein Probenhalter (30) lösbar mit der Antriebseinheit (51) verbindbar ist.

12. Vorrichtung nach einem der vorangehenden Ansprüche, **dadurch gekennzeichnet, dass** die Vorrichtung ein Satz unterschiedlicher Antriebseinheiten (51) aufweist, wobei jeweils eine Antriebseinheit (51) lösbar in die Vakuumkammer (14a) für unterschiedliche Bewegungen der Proben in den Probenbehältern (12) während der Behandlung von Proben verbindbar und mit dem Antriebsmechanismus koppelbar (46) ist.

13. Verfahren zum Betreiben einer Vorrichtung zum Behandeln von Proben in Probenbehältern unter Vakuum nach einem der vorangehenden Ansprüche, **dadurch gekennzeichnet, dass** bei der Behandlung der Proben eine kontinuierliche Bewegung des Probenhalters (30) um die Längsachse (40a) durchgeführt wird, insbesondere die Bewegung als Taumelbewegung des Probenhalters (30) um die Längsachse (40a) ausgeführt wird.

14. Verfahren nach Anspruch 13, **dadurch gekennzeichnet, dass** die Antriebseinheit (51) den Probenhalter (30) um die Längsachse (40a) mit einer Taumelfrequenz von 0,5 bis 150 U/min antreibt.

## Claims

1. Device for treating samples in sample containers (12) under vacuum, in which liquids are removed from samples in sample containers by evaporation, which device comprises:
a vacuum chamber (14a) which is provided within the housing (14) and which interacts with a vacuum pump,
a cover (16) which is used to close the vacuum chamber (14a) in a vacuum-tight manner and which can be opened for loading and unloading the sample containers (12),
a sample holder (30) with a base area and a plurality of sample container receptacles (48) for receiving sample containers (12), wherein a sample container (12) each containing a sample to be treated can be introduced into the sample container receptacles (48), with the sample container receptacles (48) being constituted by recesses in the sample holder (30), and with a sample holder axis (50a) running perpendicular to the base surface of the sample holder (30), a drive unit (51) which is mounted in the vacuum chamber (14a) and drives the sample holder (30) about a longitudinal axis (40a) of the vacuum chamber (14a),
a drive mechanism (46) which is arranged outside the vacuum chamber (14a) and which is coupled to the drive unit (51) by mechanical connection,
wherein the drive unit (51) is connected to the sample holder (30) via a holder bar (50), the sample holder axis (50a) is designed as the central axis of the holder bar (50), the sample holder axis (50a) of the sample holder (30) is designed to be movable in a wobbling manner over a predetermined acute holder angle (β) relative to the longitudinal axis (40a) of the vacuum chamber (14a),
**characterized in that** the holder bar (50) is guided and mounted in a joint (52) that is spaced apart from the sample holder (30) and the drive unit (51), said joint (52) enabling the sample holder (30) and the holder bar to rotate about two horizontal axes aligned at right angles to each other.

2. Device according to claim 1, **characterized in that** the holder angle (β) is predetermined to be within a range of between (and including) 8° and 85° to the longitudinal axis (40a), in particular that the holder angle (β) is 40°.

3. Device according to any one of the preceding claims, **characterized in that** the sample holder axis (50a) and the holder bar (50) are mounted so as to be movable about the longitudinal axis (40a) of the vacuum chamber (14a), with the longitudinal axis (40a) forming a wobble axis.

4. Device according to any one of the preceding claims, **characterized in that** the sample holder receptacles (48) each have a mounting axis which are designed as longitudinal axes, and the mounting axes of the sample container receptacles (48) are aligned parallel to one another, preferably the sample holder axis (50a) is aligned parallel to the mounting axes of all sample container receptacles (48).

5. Device according to any one of the preceding claims, **characterized in that** a drive shaft (40) cooperating with the drive unit (51) is provided, which generates a wobbling motion of the sample holder (30) about the longitudinal axis (40a) via the holder bar (50), in particular that the drive shaft (40) cooperates with a gear unit (60, 62, 64, 66) for transmitting the rotational movement.

6. Device according to claim 5, **characterized in that** the gear unit (60, 62, 64, 66) has a first gear wheel (66) connected to the drive shaft (40) and a second gear wheel (64) connected to the sample holder (30), with the first and second gear wheels (64, 66) meshing with one another in a positive manner, with the holder bar (50) preferably being connected to the second gear wheel (64).

7. Device according to claim 5, **characterized in that** the gear unit (60, 62, 64, 66) forms a step-up gear or a reduction gear.

8. Device according to any one of the preceding claims, **characterized in that** the joint (52) is arranged in a joint holder (54) which is connected to the vacuum chamber (14a).

9. Device according to any one of the preceding claims, **characterized in that** the drive mechanism (46) and the drive unit (51) are coupled to one another via a contactless coupling.

10. Device according to any one of the preceding claims, **characterized in that** a device for heating the sample containers (12) and the samples is provided, in particular IR emitters, which are in particular directed onto the samples from above.

11. Device according to any one of the preceding claims, **characterized in that** a set of different types of sample holders (30) is provided, with one sample holder (30) each being detachably connectable to the drive unit (51).

12. Device according to any of the preceding claims, **characterized in that** the device comprises a set of different drive units (51), wherein each drive unit (51) can be detachably connected to the vacuum chamber (14a) for different movements of the samples in the sample containers (12) during the treatment of samples and can be coupled to the drive mechanism (46).

13. Method for operating a device for treating samples in sample containers under vacuum according to any one of the preceding claims, **characterized in that** during the treatment of the samples, the sample holder (30) is moved continuously around the longitudinal axis (40a), in particular the movement is performed as a wobbling motion of the sample holder (30) around the longitudinal axis (40a).

14. Method according to claim 13, **characterized in that** the drive unit (51) drives the sample holder (30) around the longitudinal axis (40a) at a wobble frequency of between 0.5 rpm and 150 rpm.

## Revendications

1. Dispositif pour le traitement d'échantillons dans des récipients pour échantillons (12) sous vide, avec lequel des liquides sont retirés d'échantillons dans des récipients pour échantillons par évaporation,
avec un boîtier (14),
une chambre à vide (14a) disposée dans le boîtier (14), qui coopère avec une pompe à vide,
un couvercle (16), par l'intermédiaire duquel la chambre à vide (14a) peut être fermée de manière étanche au vide et peut être ouverte pour le chargement et déchargement des récipients pour échantillons (12),
un porte-échantillon (30) avec une surface de base et avec plusieurs logements de récipients pour échantillons (48) pour le logement de récipients pour échantillons (12), dans lequel un récipient pour échantillons (12) avec un échantillon à traiter peut être introduit dans un logement de récipients pour échantillons (48) respectif, les logements de récipients pour échantillons (48) étant formés par des évidements dans le porte-échantillon (30) et un axe de porte-échantillon (50a) étant orienté perpendiculairement à la surface de base du porte-échantillon (30),
une unité d'entraînement (51) montée dans la chambre à vide (14a), qui entraîne le porte-échantillon (30) autour d'un axe longitudinal (40a) de la chambre à vide (14a),
un mécanisme d'entraînement (46) disposé à l'extérieur de la chambre à vide (14a), qui est accouplé par liaison d'entraînement à l'unité d'entraînement (51),
dans lequel l'unité d'entraînement (51) est reliée au porte-échantillon (30) par l'intermédiaire d'une barre de support (50), l'axe de porte-échantillon (50a) est réalisé en tant qu'axe médian de la barre de support (50), l'axe de porte-échantillon (50a) du porte-échantillon (30) est réalisé mobile en culbutage par rapport à l'axe longitudinal (40a) de la chambre à vide (14a) sur un angle de support (ß) prédéfini aigu, **caractérisé en ce que** la barre de support (50) est montée guidée par l'intermédiaire d'une articulation (52) disposée de manière espacée par rapport au porte-échantillon (30) et à l'unité d'entraînement (51), laquelle permet le mouvement rotatif du porte-échantillon (30) avec la barre de support autour de deux axes horizontaux, orientés à angle droit l'un par rapport à l'autre.

2. Dispositif selon la revendication 1, **caractérisé en ce que** l'angle de support (ß) se situe de manière prédéfinie dans une plage de 8° à 85° inclus par rapport à l'axe longitudinal (40a), en particulier l'angle de support (ß) est égal à 40°.

3. Dispositif selon l'une quelconque des revendications précédentes, **caractérisé en ce que** l'axe de porte-échantillon (50a) et la barre de support (50) est monté mobile autour de l'axe longitudinal (40a) de la chambre à vide (14a), dans lequel l'axe longitudinal (40a) forme un axe de culbutage.

4. Dispositif selon l'une quelconque des revendications précédentes, **caractérisé en ce que** les logements de récipients pour échantillons (48) présentent respectivement un axe de logement, qui sont réalisés en tant qu'axes longitudinaux, et les axes de logement des logements de récipients pour échantillons (48) sont orientés parallèlement les uns aux autres, de préférence l'axe de porte-échantillon (50a) est réalisé parallèlement aux axes de logement de tous les logements de récipients pour échantillons (48).

5. Dispositif selon l'une quelconque des revendications précédentes, **caractérisé en ce qu'**un arbre d'entraînement (40) coopérant avec l'unité d'entraînement (51) est prévu, lequel produit un mouvement de culbutage du porte-échantillon (30) par l'intermédiaire de la barre de support (50) autour de l'axe longitudinal (40a), en particulier l'arbre d'entraînement (40) coopère avec un engrenage (60, 62, 64, 66) pour la transmission du mouvement de rotation.

6. Dispositif selon la revendication 5, **caractérisé en ce que** l'engrenage (60, 62, 64, 66) présente une première roue dentée (66) reliée à l'arbre d'entraînement (40) et une deuxième roue dentée (64) reliée au porte-échantillon (30), dans lequel la première et la deuxième roue dentée (64 ; 66) s'engrènent par liaison d'entraînement, de préférence la barre de support (50) est reliée à la deuxième roue dentée (64).

7. Dispositif selon la revendication 5, **caractérisé en ce que** l'engrenage (60, 62, 64, 66) forme un engrenage multiplicateur ou réducteur.

8. Dispositif selon l'une quelconque des revendications précédentes, **caractérisé en ce que** l'articulation (52) est disposée dans un porte-articulation (54) relié à la chambre à vide (14a).

9. Dispositif selon l'une quelconque des revendications précédentes, **caractérisé en ce que** le mécanisme d'entraînement (46) et l'unité d'entraînement (51) sont accouplés l'un à l'autre par un accouplement sans contact.

10. Dispositif selon l'une quelconque des revendications précédentes, **caractérisé en ce qu'**un appareil de chauffage des récipients pour échantillons (12) et des échantillons est prévu, en particulier des émetteurs de rayons infrarouges, lesquels sont dirigés en particulier du haut vers les échantillons.

11. Dispositif selon l'une quelconque des revendications précédentes, **caractérisé en ce qu'**un ensemble de différents types de porte-échantillons (30) est prévu, dans lequel respectivement un porte-échantillon (30) peut être relié de manière détachable à l'unité d'entraînement (51).

12. Dispositif selon l'une quelconque des revendications précédentes, **caractérisé en ce que** le dispositif présente un ensemble de différentes unités d'entraînement (51), dans lequel respectivement une unité d'entraînement (51) peut être reliée de manière détachable dans la chambre à vide (14a) pour différents mouvements des échantillons dans les récipients pour échantillon (12) pendant le traitement d'échantillons et peut être accouplée (46) au mécanisme d'entraînement.

13. Procédé pour faire fonctionner un dispositif de traitement d'échantillons dans des récipients pour échantillons sous vide selon l'une quelconque des revendications précédentes, **caractérisé en ce que** lors du traitement des échantillons un mouvement continu du porte-échantillon (30) est effectué autour de l'axe longitudinal (40a), en particulier le mouvement est effectué en tant que mouvement de culbutage du porte-échantillon (30) autour de l'axe longitudinal (40a).

14. Procédé selon la revendication 13, **caractérisé en ce que** l'unité d'entraînement (51) entraîne le porte-échantillon (30) autour de l'axe longitudinal (40a) avec une fréquence de culbutage de 0,5 à 150 U/min.
